# EUROPÄISCHE PATENTANMELDUNG

(11) **EP 1 433 942 A2**
(43) Veröffentlichungstag der Anmeldung: **30.06.2004**
(21) Anmeldenummer: 03014383.8
(22) Anmeldetag: 26.06.2003
(51) Int. Cl.: F02D 41/22, F02M 59/44

(54) **Kraftstoffpumpvorrichtung**

(30) Priorität: 23.12.2002 DE 10260750
(71) Anmelder: ROBERT BOSCH GMBH, 70442 Stuttgart (DE)
(72) Erfinder: Ott, Karl, 71706 Markgroeningen (DE); Mueller, Uwe, 71282 Hemmingen (DE); Schnell, Ruediger, 69412 Eberbach (DE); Hollmann, Timm, 71636 Ludwigsburg (DE)

(57) **Zusammenfassung**

Die Erfindung betrifft insbesondere eine Kraftstoffpumpvorrichtung 200 zum Zuführen von Kraftstoff aus einem Tank 100 mit Hilfe eines Pumpelements 210 in einen Kraftstoffspeicher 300 einer Brennkraftmaschine 400, wobei die Kraftstoffpumpvorrichtung 200 einen Druckdämpfer 240 mit einer Entlüftungsleitung 243 aufweist. Um einen eventuellen Fehler in genau dem Druckdämpfer 240 feststellen zu können, wird vorgeschlagen, in die Entlüftungsleitung 243 ein steuerbares Absperrventil 245 einzubauen und mit Hilfe einer Diagnoseeinrichtung 260 eine Fehlerhaftigkeit des Druckdämpfers 240 dann zu detektieren, wenn die Zeiten zu denen eine Lambda-Sonde 430 der Brennkraftmaschine 400 ein zu fettes Kraftstoffgemisch feststellt, in einem zeitlichen Zusammenhang zu den Öffnungszeiten des Absperrventils 245 stehen.

## Beschreibung

### Stand der Technik

Die Erfindung betrifft ein Verfahren und eine Kraftstoffpumpvorrichtung zum Zuführen von Kraftstoff aus einem Tank in einen Kraftstoffspeicher einer Brennkraftmaschine. Die Erfindung betrifft weiterhin eine Diagnoseeinrichtung für die Kraftstoffpumpvorrichtung und ein Computerprogramm für die Diagnoseeinrichtung.

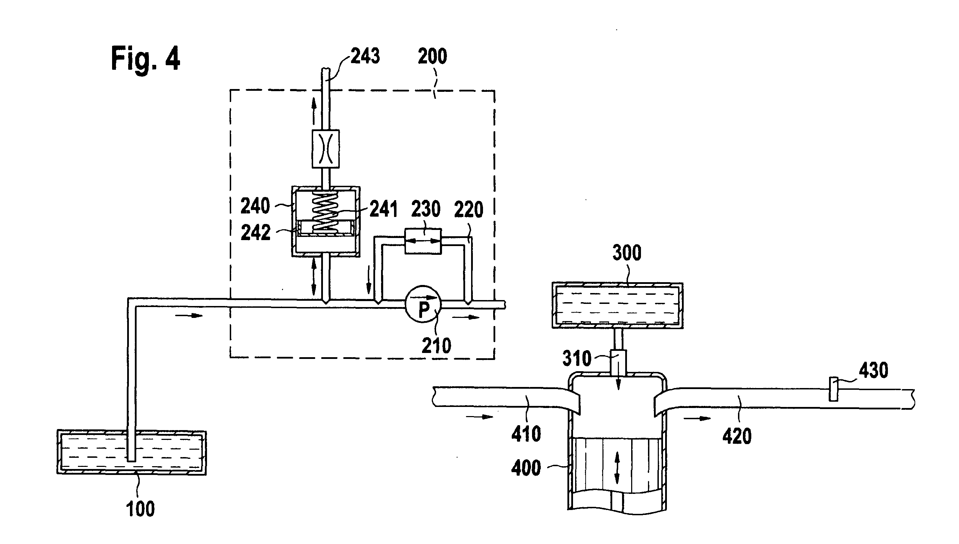

Kraftstoffpumpvorrichtungen der beschriebenen Art sind im Stand der Technik grundsätzlich bekannt. Ein Beispiel einer solchen Kraftstoffpumpvorrichtung ist in Figur 4 abgebildet und wird nachfolgend näher beschrieben.

Wie aus Figur 4 ersichtlich ist, dient die Kraftstoffpumpvorrichtung 200 zum Zuführen von Kraftstoff aus einem Tank 100 in einen Kraftstoffspeicher 300. Zu diesem Zweck umfasst sie ein Pumpelement 210. Daneben umfasst die Kraftstoff-Pumpvorrichtung 200 eine Kraftstoffrückführleitung 220, welche über ein Steuerventil 230 parallel zu dem Pumpelement 210 geschaltet ist, um überschüssigen Kraftstoff am Ausgang des Pumpelementes auf deren Niederdruck-Eingangsseite gegebenenfalls zurückzuführen.

Weiterhin umfasst die Kraftstoffpumpvorrichtung 200 auf ihrer Niederdruckeingangsseite einen Druckdämpfer 240, welcher als Kraftstoffzwischenspeicher fungiert und in Verbindung mit einer elektrischen Kraftstoffpumpe (nicht gezeigt) sicherstellt, dass auf der Eingangsseite des Pumpelementes 210 stets ein notwendiger Eingangsdruck herrscht. Um diese Funktion realisieren zu können, weist der Druckdämpfer 240 üblicherweise eine Membran 242 auf, die den Druckdämpfer in zwei Raumbereiche unterteilt. Die Vorderseite der Membran begrenzt einen ersten Raumbereich des Druckdämpfers, der zur Ansammlung von Kraftstoff dient, während gleichzeitig auf die Rückseite der Membran 242 im zweiten Raumbereich mit Hilfe einer Feder 241 eine Kraft ausgeübt wird, so dass der Kraftstoff in dem ersten Raumbereich unter Druck gespeichert wird.

Für den Fall, dass das Steuerventil 230 geöffnet wird und es deshalb zu einem Druckausgleich zwischen der Ausgangs- und der Eingangsseite des Pumpelementes 210 kommt, kann der Druckdämpfer 240 deshalb im Falle eines Förderhubs den Druckanstieg durch einen Absteuerstoß (Kompressionsmenge) und ein Ausschieben der nicht in den Hochdruckkreis zu fördernden Menge begrenzen. Im Falle eines Saughubs wird der Druckabfall auf der Eingangsseite des Pumpelements 10 dadurch verhindert, dass der Druckdämpfer 240 den im ersten Raumbereich gespeicherten Druck wieder direkt zuführt.

Zur Belüftung der Rückseite, das heißt, der grundsätzlich kraftstofffreien Seite der Membran 242, weist der Druckdämpfer 240 eine Entlüftungsöffnung 243 auf. Die Belüftung ist deshalb erforderlich, weil selbst bei intakter Membran geringe Mengen von Kraftstoff von der Vorderseite durch die Membran hindurch zu deren Rückseite diffundieren können und dort verdunsten beziehungsweise abgeführt werden müssen. Weiterhin besteht die Gefahr, dass trotz bestehender Dichtfunktion bei Gegendruck, im Falle einer defekten Membran und der damit stark erhöhten Druckpulsation, es zu einer unzulässigen Leckage in den Motorraum kommen kann. Bei dem in Serie gefertigten PKW D4 von Toyota, der mit einem Kraftstoffpumpsystem von Denso ausgestattet ist, mündet die Entlüftungsbohrung, wie in Fig. 4 gezeigt, in die Umgebung.

Zum anderen ermöglicht diese Art der Entlüftung keine Feststellung einer eventuellen Fehlerhaftigkeit des Druckdämpfers.

Ausgehend von diesem Stand der Technik ist es die Aufgabe der Erfindung, eine bekannte Kraftstoffpumpvorrichtung zum Zuführen von Kraftstoff aus einem Tank in einen Kraftstoffspeicher, eine Diagnoseeinrichtung für die Kraftstoffpumpvorrichtung, ein Verfahren zum Betreiben der Diagnoseeinrichtung und ein Computerprogramm für die Diagnoseeinrichtung derart weiterzubilden, dass die Diagnoseeinrichtung in die Lage versetzt wird, eine Fehlerhaftigkeit eines Druckdämpfers der Kraftstoffpumpvorrichtung eindeutig zu erkennen.

Diese Aufgabe wird in Bezug auf die Kraftstoffpumpvorrichtung durch den Gegenstand des Patentanspruchs 1 gelöst. Demnach wird die Aufgabe insbesondere dadurch gelöst, dass bei der beanspruchten Kraftstoffpumpvorrichtung ein Absperrventil, welches über eine Steuereinrichtung ansteuerbar ist, in die Entlüftungsleitung eingebaut ist; dass dasjenige Ende der Entlüftungsleitung, welches nicht mit dem Druckdämpfer verbunden ist, direkt oder indirekt mit der Reinluftseite des Saugrohres der Brennkraftmaschine in Verbindung steht; und dass eine Diagnoseeinrichtung vorgesehen ist, die ausgebildet ist zum Detektierten einer Fehlerhaftigkeit des Druckdämpfers, wenn die Zeiten zu denen eine Lambda-Sonde der Brennkraftmaschine ein zu fettes Kraftstoffgemisch feststellt, in einem zeitlichen Zusammenhang zu den Öffnungszeiten des Absperrventils stehen.

### Vorteile der Erfindung

Bei dem beanspruchten Aufbau der Vorrichtung kann eine Abführung von Kraftstoff von der Rückseite der Membran aus dem Druckdämpfer heraus nur dann erfolgen, wenn das Absperrventil, und damit die Entlüftungsleitung, geöffnet ist. Weil das Absperrventil jedoch nur zu vorbestimmten Zeitintervallen geöffnet wird, sind die Zeitpunkte eines möglichen Abflusses von Kraftstoff ebenfalls bekannt. Wenn die gesamte Vorrichtung zum Zuführen von Kraftstoff aus dem Tank in den Kraftstoffspeicher während der Sperrzeiten des Absperrventils regelmäßig einwandfrei arbeitet, das heißt, insbesondere nicht zu viel Kraftstoff in die Brennkraftmaschine leitet, und Fehlfunktionen regelmäßig nur in etwa während dessen Öffnungszeiten oder kurze Zeit danach auftreten, dann lässt dieser Sachverhalt einen eindeutigen Rückschluss auf einen Defekt in dem Druckdämpfer zu.

Insbesondere eine defekte Membran des Druckdämpfers führt nur während der Öffnungszeiten des Absperrventils zu einem unkontrollierten Abfluss von Kraftstoff aus dem Druckdämpfer über das Saugrohr in die Brennkraftmaschine. Der dann erhöhte Kraftstoffanteil im Kraftstoff-Luft-Gemisch kann nach dessen Verbrennung im Abgas der Brennkraftmaschine mit Hilfe einer Lambda-Sonde erkannt und zu der Diagnoseeinrichtung gemeldet werden. Stellt die Diagnoseeinrichtung dann einen zeitlichen Zusammenhang zwischen den Öffnungszeiten des Absperrventils und dem Auftreten des zu fetten Kraftstoffgemisches fest, so kann sie in diesem Fall vorteilhafterweise eindeutig auf einen Defekt in dem Druckdämpfer zurückschließen. Ein zeitlicher Zusammenhang im Sinne der Erfindung besteht insbesondere dann, wenn das zu fette Kraftstoffgemisch nur während einer vorgegebenen Zeitdauer nach dem Öffnen des Absperrventils festgestellt wird. Diese Zeitdauer wird vorzugsweise wesentlich kürzer gewählt, als ein Zeitintervall zwischen zwei aufeinanderfolgenden Öffnungszeiten. Wird zu fettes Kraftstoffgemisch auch noch nach Ablauf der vorgebbaren Zeitdauer festgestellt, so ist der Rückschluss auf einen Defekt in dem Druckdämpfer nicht mehr zulässig; das zu fette Gemisch kann dann auch andere Ursachen haben.

Ein weiterer Vorteil der beanspruchten Verbindung der Entlüftung zu dem Saugrohr liegt darin, dass abzuführender Kraftstoff nicht unkontrolliert in die Umwelt entweicht, sondern dem Saugrohr zugeführt wird, wo er entweder verdunstet oder der Brennkammer der Brennkraftmaschine zugeführt wird. Das ist unkritisch, weil es sich bei dem rückgeführten Kraftstoff stets nur um sehr kleine Mengen handelt.

Gemäß einem ersten Ausführungsbeispiel der Erfindung ist es vorteilhaft, wenn die Öffnungszeiten für das Absperrventil wesentlich kleiner als dessen Sperrzeiten gewählt werden, weil dann die Genauigkeit der Fehlerdiagnose im Hinblick auf eine Fehlerhaftigkeit des Druckdämpfers steigt.

Bei festgestelltem Fehlverhalten des Druckdämpfers ist es vorteilhaft, die Ansteuerung des Absperrventils an eine dann beschränkte Last, Drehzahl und Raildruck (Hochdruck) der Brennkraftmaschine anzupassen, um die Sicherheit der Brennkraftmaschine nicht zu gefährden.

Alternativ zu einer direkten Verbindung der Entlüftungsleitung mit dem Saugrohr kann diese auch mit der Entlüftung des Tanks der Brennkraftmaschine verbunden werden. Von dort gelangt dann der abgeführte Kraftstoff über einen Aktivkohlefilter in Verbindung mit dem Tankentlüftungsventil ebenfalls in das Saugrohr.

Die oben genannte Aufgabe wird weiterhin durch eine Diagnoseeinrichtung für die Kraftstoffpumpvorrichtung, ein Verfahren zum Betreiben der Diagnoseeinrichtung und ein Computerprogramm für die Diagnoseeinrichtung gelöst. Die Vorteile dieser Lösungen entsprechen den zuvor mit Bezugnahme auf die Kraftstoffpumpvorrichtung beschriebenen Vorteile.

Weitere vorteilhafte Ausgestaltungen sind Gegenstand der Unteransprüche.

### Zeichnungen

Es folgt eine detaillierte Beschreibung von Ausführungsbeispielen der Erfindung unter Bezugnahme auf die beigefügten Figuren, wobei:
- Figur 1: ein erstes Ausführungsbeispiel der Kraftstoffpumpvorrichtung gemäß der Erfindung;
- Figur 2: ein Taktsignal zur Ansteuerung des Absperrventils;
- Figur 3: ein zweites Ausführungsbeispiel der Kraftstoffpumpvorrichtung; und
- Figur 4: eine Kraftstoffpumpvorrichtung gemäß dem Stand der Technik
zeigt.

### Beschreibung der Ausführungsbeispiele

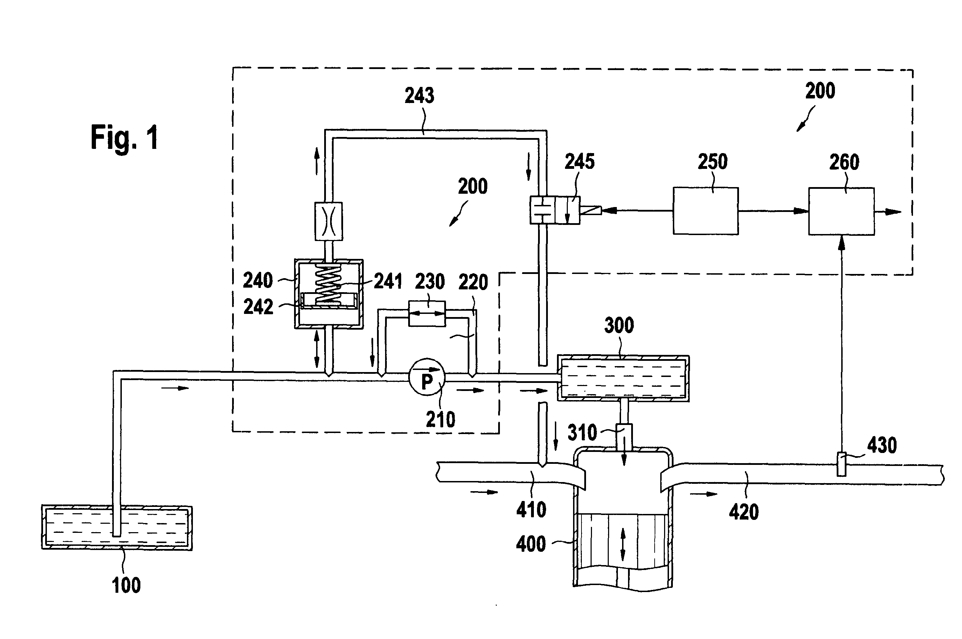

Figur 1 zeigt eine Kraftstoffpumpvorrichtung zum Zuführen von Kraftstoff aus einem Tank 100 in einen Kraftstoffspeicher 300 gemäß der Erfindung. Der Aufbau dieser Vorrichtung entspricht überwiegend dem Aufbau der in Figur 4 gezeigten Vorrichtung. Identische Bestandteile der Vorrichtung üben die gleiche Funktion wie oben unter Figur 4 beschrieben aus, und werden mit den gleichen Bezugszeichen bezeichnet.

Die Kraftstoffpumpvorrichtung 200 gemäß Figur 1 unterscheidet sich von der in Figur 4 beschriebenen Vorrichtung dadurch, dass sie Komponenten aufweist, die eine Diagnose eines Fehlers in einem Druckdämpfer 240 der Kraftstoffpumpvorrichtung ermöglichen. Dazu weist die Entlüftungsleitung 243 der Kraftstoffpumpvorrichtung gem.
Fig. 1 ein Absperrventil 245 auf, das mit Hilfe einer Steuereinrichtung 250 geöffnet und geschlossen werden kann. Dasjenige Ende der Entlüftungsleitung 243, welches nicht mit dem Druckdämpfer 240 verbunden ist, steht direkt mit der Reinluftseite des Saugrohres 410 der Brennkraftmaschine 400 in Verbindung. Schließlich ist eine Diagnoseeinrichtung 260 vorgesehen, die mit der Steuereinrichtung 250 synchronisiert und ausgebildet ist zum Detektierten einer Fehlerhaftigkeit des Druckdämpfers 240. Die Synchronisation bedeutet insbesondere, dass die Diagnoseeinrichtung 260 von der Steuereinrichtung über die Öffnungs- und Sperrzeiten des Absperrventils 245 informiert wird.

Nachfolgend wird das der Erfindung bzw, der Fehlerdiagnose zugrunde liegende Verfahren kurz erläutert.

Für die Durchführung der gewünschten Fehlerdiagnose werden zunächst in einem ersten Schritt die Zeitpunkte festgestellt, wann der Brennkraftmaschine ein zu fettes Kraftstoffgemisch zugeführt wurde. Das geschieht vorteilhafterweise durch Analyse des Abgases der Brennkraftmaschine 400 mit Hilfe einer ohnehin vorhandenen Lambda-Sonde 430. Das zu fette Kraftstoffgemisch kann insbesondere dann entstehen, wenn den Brennkammern der Brennkraftmaschine 400 nicht nur eine reguläre Kraftstoffmenge über das Einspritzsystem 310, sondern zusätzlich unkontrolliert Kraftstoff z.B. über das Saugrohr 410 zugeführt wird. Die Lambda-Sonde 430 wird erfindungsgemäß dazu veranlasst, ein festgestelltes zu fettes Kraftstoffgemisch an die Diagnoseeinrichtung 260 zu melden. Die Diagnoseeinrichtung 260 vergleicht dann die Zeitpunkte des Auftretens des zu fetten Kraftstoffgemisches mit den Zeitpunkten, wann das Absperrventil 245 von der Steuereinrichtung 250 geöffnet wird. Stellt die Diagnoseeinrichtung hier einen zeitlichen Zusammenhang fest, so kann sie aus dieser Erkenntnis eindeutig auf einen Fehler im Druckdämpfer 240 zurückschließen. Dieser Rückschluss ist deshalb zulässig, weil bei der beschriebenen Konstellation nur in den Zeiten, wenn das Absperrventil geöffnet ist, zusätzlicher Kraftstoff über die Entlüftungsleitung 243 und das Saugrohr 410 in die Brennkammern der Brennkraftmaschine gelangen kann, was sich danach in veränderten Abgaswerten widerspiegelt. Der Rückschluss ist nur dann zulässig, wenn dieser Effekt während der Sperrzeiten des Absperrventils 245 nicht auftritt. Ist dies nicht der Fall, so kann das festgestellte erhöhte Kraftstoffgemisch auch andere Ursachen haben. Vorzugsweise wird das Absperrventil zur Dämpferdiagnose nur dann betätigt, wenn gerade keine, auf unregelmäßig eingebrachtem Kraftstoff basierende Lambdaabweichung vorliegt. Dadurch wird die Druckdämpferdiagnose eindeutig.

Die Fehlerdiagnose ist umso eindeutiger möglich, je deutlicher sich die Sperrzeiten und die Öffnungszeiten des Absperrventils in ihrer Länge voneinander unterscheiden.

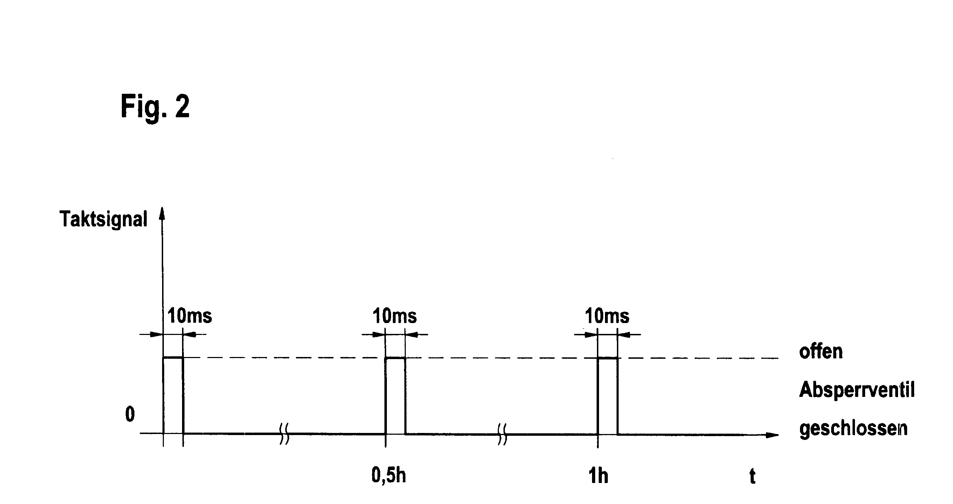

Figur 2 zeigt ein Taktsignal für eine vorteilhafte Ansteuerung des Absperrventils 245 durch die Steuereinrichtung 250. Aus Figur 2 ist ersichtlich, dass die Zeitintervalle, während derer das Absperrventil geöffnet ist, vorzugsweise wesentlich geringer sind als dessen Sperrzeiten. Beispielsweise dauert das Zeitintervall währenddessen das Absperrventil geöffnet ist, 10 Millisekunden, während die Sperrzeit cirka 1/2 Stunde beträgt.

Die nur kurzen Öffnungszeiten des Absperrventils bewirken weiterhin, dass selbst bei defekter Membran 242 nur sehr geringe Mengen an Kraftstoff in das Saugrohr gelangen. Das hat zur Folge, dass die Brennkraftmaschine auch in diesem Fall nicht infolge einer zu großen zugeführten Kraftstoffmenge ausgeht. Eine angepasste Tankentlüftungsventilsteuerung sorgt dabei für einen weiterhin einwandfreien Motorlauf, indem sie nach dem Öffnen/Schließen-Vorgang des Umschaltventils 245 nur sehr kurz angesteuert wird, um bei einem defekten Dämpfer den anliegenden Kraftstoffeintrag in das Saugrohr zu begrenzen. Wird Kraftstoff vor dem Tankentlüftungsventil festgestellt, so wird dieses und auch das Umschaltventil 245 nicht mehr betätigt.

Das beschriebene Verfahren zum Betreiben der Diagnoseeinrichtung kann auf verschiedene Weise realisiert werden. So ist es möglich, dieses Verfahren in eine elektronische Hardware-Schaltung oder alternativ dazu, in eine Software umzusetzen. Eine Umsetzung in Software bedeutet, dass ein Computerprogramm mit einer Abfolge von Befehlen vorhanden ist. Dann ist es weiterhin möglich, das Computerprogramm gegebenenfalls zusammen mit weiteren Computerprogrammen zur Steuerung und/oder Regelung der Brennkraftmaschine auf einen computerlesbaren Datenträger abzuspeichern. Dabei kann es sich um eine Diskette, eine Compact-Disk (sogenannte CD), einen sogenannten Flash-Memory oder dergleichen handeln. Die auf dem Datenträger abgespeicherte Software kann dann als Produkt an Kunden verkauft werden.

Im Falle einer Software-Realisierung ist es weiterhin möglich, das Computerprogramm gegebenenfalls zusammen mit weiteren Computerprogrammen zur Steuerung und/oder Regelung der Brennkraftmaschine - oder ohne die Zuhilfenahme eines elektronischen Speichermediums - über ein elektronisches Kommunikationsnetzwerk, insbesondere das Internet, als Produkt an den Kunden zu übertragen beziehungsweise zu verkaufen.

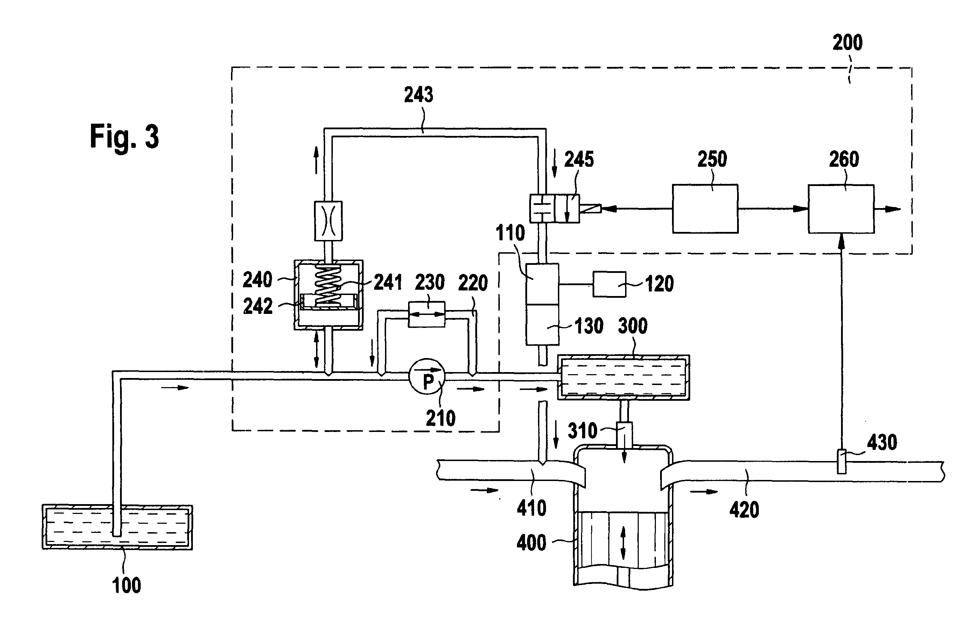

Fig. 3 zeigt ein zweites Ausführungsbeispiel der Erfindung bei dem die Entlüftungsleitung 243 nicht direkt mit dem Saugrohr, sondern mit der Entlüftungsleitung 110 des Tanks 100 verbunden ist. Über den mit der Entlüftungsleitung 110 in Verbindung stehenden Aktivkohlefilter 120 und das Tankentlüftungsventil 130 besteht jedoch auch die Möglichkeit, dass über die Entlüftungsleitung 243 abzuführender Kraftstoff in das Saugrohr 410 gelangt. Das oben beschriebene Diagnoseverfahren wird bei diesem Ausführungsbeispiel identisch angewandt.

## Patentansprüche

1. Kraftstoffpumpvorrichtung (200) einer Brennkraftmaschine (400), umfassend:
ein Pumpelement (210) zum Zuführen von Kraftstoff aus einem Tank (100) in einen Kraftstoffspeicher (300) der Brennkraftmaschine (400);
und einen Druckdämpfer (240) mit einer Entlüftungsleitung (243) zum Ausgleichen von Schwankungen des Kraftstoffdruckes auf der Niederdruckeingangsseite des Pumpelementes (210);
**dadurch gekennzeichnet dass**
ein Absperrventil (245), welches über eine Steuereinrichtung (250) ansteuerbar ist, in die Entlüftungsleitung (243) eingebaut ist;
dasjenige Ende der Entlüftungsleitung (243), welches nicht mit dem Druckdämpfer (240) verbunden ist, direkt oder indirekt mit der Reinluftseite des Saugrohres (410) der Brennkraftmaschine (400) in Verbindung steht; und
eine Diagnoseeinrichtung (260) vorgesehen ist, die ausgebildet ist zum Detektierten einer Fehlerhaftigkeit des Druckdämpfers (240), wenn die Zeiten zu denen eine Lambda-Sonde (430) der Brennkraftmaschine (400) ein zu fettes Kraftstoffgemisch feststellt, in einem zeitlichen Zusammenhang zu den Öffnungszeiten des Absperrventils (245) stehen.

2. Kraftstoffpumpvorrichtung nach Anspruch 1, **dadurch gekennzeichnet, dass** die Diagnoseeinrichtung (260) ausgebildet ist, eine Fehlerhaftigkeit des Druckdämpfers (240) nur dann zu detektieren, wenn die Zeitpunkte, zu denen die Lambda-Sonde (430) ein zu fettes Kraftstoffgemisch feststellt, während einer vorgebbaren Zeitdauer liegen, die mit dem Öffnen des Absperrventils (245) beginnt.

3. Kraftstoffpumpvorrichtung (200) nach Anspruch 1 oder 2, **dadurch gekennzeichnet, dass** die Steuereinrichtung (250) ausgebildet ist, das Absperrventil (245) während der Betriebszeit der Brennkraftmaschine mit einem vorzugsweise periodischen Taktsignal so anzusteuern, dass die Öffnungszeiten des Absperrventils (245) wesentlich, vorzugsweise um Dimensionen kleiner als dessen Sperrzeiten sind.

4. Kraftstoffpumpvorrichtung (200) nach einem der vorhergehenden Ansprüche, **dadurch gekennzeichnet, dass** dasjenige Ende der Entlüftungsleitung (243), welches nicht mit dem Druckdämpfer (240) verbunden ist, über eine Entlüftungsleitung (110) des Tanks (100), ein Aktivkohlefilter (120) und ein Tankentlüftungsventil mit der Reinluftseite des Saugrohres (410) in Verbindung steht.

5. Kraftstoffpumpvorrichtung (200) nach einem der vorhergehenden Ansprüche, **dadurch gekennzeichnet, dass** die Steuereinrichtung (250) ausgebildet ist, bei festgestelltem Fehlverhalten des Druckdämpfers (240) die Ansteuerung des Absperrventils (245) an eine dann beschränkte Last beziehungsweise Drehzahl und Raildruck (Hochdruck) der Brennkraftmaschine (400) anzupassen.

6. Diagnoseeinrichtung (260) für eine Kraftstoffpumpvorrichtung (200) einer Brennkraftmaschine (400), wobei die Kraftstoffpumpvorrichtung ein Pumpelement (210) zum Zuführen von Kraftstoff aus einem Tank (100) in einen Kraftstoffspeicher (300) der Brennkraftmaschine, einen Druckdämpfer (240) mit einer Entlüftungsleitung (243) zum Ausgleichen von Schwankungen des Kraftstoffdruckes auf der Niederdruckeingangsseite des Pumpelements (210), ein Absperrventil (245), welches über eine Steuereinrichtung (250) ansteuerbar ist, in die Entlüftungsleitung (243) eingebaut ist, umfasst und wobei dasjenige Ende der Entlüftungsleitung (243), welches nicht mit dem Druckdämpfer (240) verbunden ist, direkt oder indirekt mit der Reinluftseite des Saugrohres der Brennkraftmaschine in Verbindung steht, **dadurch gekennzeichnet, dass** die Diagnoseeinrichtung (260) ausgebildet ist zum Detektierten einer Fehlerhaftigkeit des Druckdämpfers (240), wenn die Zeiten zu denen eine Lambda-Sonde (430) der Brennkraftmaschine (400) ein zu fettes Kraftstoffgemisch feststellt, in einem engen zeitlichen Zusammenhang zu den Öffnungszeiten des Absperrventils (245) stehen.

7. Verfahren zum Betreiben einer Diagnoseeinrichtung (260) bei einer Kraftstoffpumpvorrichtung (200) gemäß einem der Ansprüche 1 bis 5, **gekennzeichnet durch** die folgenden Schritte:
Feststellen von zumindest einem Zeitpunkt, wann der Brennkraftmaschine (400) ein falsches Kraftstoffgemisch zugeführt wird;
Prüfen, ob dieser Zeitpunkt in enger zeitlicher Relation zu dem Zeitintervall steht, währenddessen das Absperrventil (245) des Druckdämpfers (240) geöffnet ist; und
Feststellen der Fehlerhaftigkeit des Druckdämpfers (240), wenn der vorherige Prüfschritt bejaht wird.

8. Computerprogramm für eine Diagnoseeinrichtung (260) mit einer Abfolge von Befehlen, die dazu geeignet sind, das Verfahren gemäß Patentanspruch 7 auszuführen, wenn sie auf einem Computer ausgeführt werden.

9. Computerprogramm nach Anspruch 8, wobei die Abfolge von Befehlen auf einem Computer lesbaren Datenträger gespeichert ist.
